# EUROPEAN PATENT APPLICATION

(11) **EP 3 992 722 A1**
(43) Date of publication of application: **04.05.2022**
(21) Application number: 21204815.1
(22) Date of filing: 26.10.2021
(51) Int. Cl.: G03G 15/00, G06F 3/12, G06K 15/02

(54) **PROCESSING JOB GENERATION APPARATUS AND SHEET PROCESSING SYSTEM**

(30) Priority: 30.10.2020 JP 2020182747
(71) Applicant: Duplo Seiko Corporation, Kinokawa-shi, Wakayama 649-6551 (JP)
(72) Inventor: KANAOKA, Hiromichi, Kinokawa-shi, 649-6551 (JP)
(74) Representative: Mewburn Ellis LLP

(57) **Abstract**

A processing job generation apparatus (20) includes a decision unit (21) that decides whether or not a sheet processing apparatus (30) can execute a processing of a sheet based on a layout data.

## Description

### Background of the Invention

### Field of the Invention

The present invention relates to a processing job generation apparatus and a sheet processing system.

### Description of the Related Art

Patent Literature 1 discloses a paper processing apparatus having a cutting mechanism.

### Prior Art Document

### Patent Document

Patent Literature 1: JP 5613008 B2

### Summary of the Invention

Generally, the paper processing apparatus processes a paper on which an image of a product is printed according to a preset processing job. For example, the processing job is created based on layout data including at least arrangement information of a product, but it is difficult for the paper processing apparatus to determine whether or not the created processing job can be executed from the layout data, and it may be noticed that the created processing job cannot be executed by the paper processing apparatus after the processing job is created. In such a case, there is a possibility that trouble such as re-creation of layout data or re-execution of a processing of a paper is generated.

An object of the present invention is to provide a processing job generation apparatus capable of deciding whether or not a processing job to be generated is executable by a sheet processing apparatus before the processing job is generated, and a sheet processing system including the processing job generation apparatus.

A processing job generation apparatus according to an aspect of the present invention is
a processing job generation apparatus that generates a processing job of a sheet processing apparatus based on layout data including at least arrangement information of a product, the sheet processing apparatus being capable of processing according to the processing job a sheet on which a print image including at least one image of the product is printed, the processing job generation apparatus including
a decision unit that decides whether or not the sheet processing apparatus can execute a processing of the sheet based on the layout data.

A sheet processing system according to an aspect of the present invention includes:
the processing job generation apparatus according to the aspect; and
the sheet processing apparatus that processes the sheet according to the processing job generated by the processing job generation apparatus.

The processing job generation apparatus includes the decision unit that decides whether or not the sheet processing apparatus can execute the processing of the sheet based on the layout data. With such a configuration, it is possible to realize a processing job generation apparatus capable of deciding whether or not a processing job to be generated is executable by the sheet processing apparatus from the layout data before the processing job is generated.

According to the sheet processing system, it is possible to realize a sheet processing system capable of suppressing occurrence of trouble such as re-creation of a processing job or re-execution of a processing of a sheet by the processing job generation apparatus.

### Brief Description of the Drawings

FIG. 1 is a block diagram illustrating a sheet processing system including a processing job generation apparatus according to an embodiment of the present invention.
FIG. 2 is a schematic diagram of a print image included in print data generated by a print data generation apparatus of the sheet processing system of FIG. 1.
FIG. 3 is a flowchart for explaining a processing job generation process of the processing job generation apparatus of FIG. 1.

### Description of the Preferred Embodiment(s)

Hereinafter, an example of the present disclosure will be described with reference to the accompanying drawings. Note that, in the following description, although terms indicating a specific direction or position (for example, terms including "up", "down", "right", "left", "front", "rear") will be used as necessary, they are used for facilitating understanding of the present disclosure with reference to the drawings, and the technical scope of the present disclosure is not limited by the meaning of those terms. It should be noted that the following description is merely exemplary in nature and is not intended to limit the present disclosure, its application, or its use. Furthermore, the drawings are schematic, and the ratios of the dimensions do not always match actual ones.

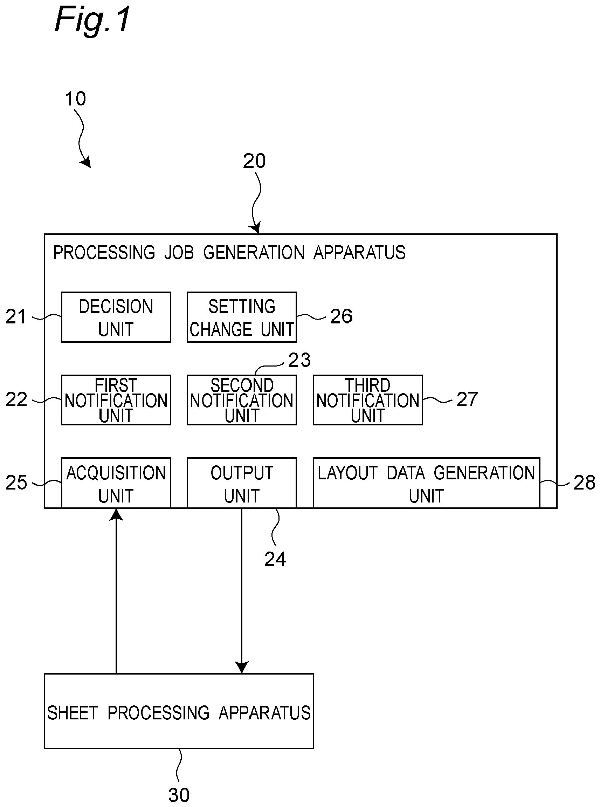

As illustrated in FIG. 1, a processing job generation apparatus 20 according to an embodiment of the present invention constitutes a sheet processing system 10 together with a sheet processing apparatus 30 as an example. The processing job generation apparatus 20 and the sheet processing apparatus 30 are communicably connected to each other.

The processing job generation apparatus 20 includes, as an example, a CPU (not illustrated) that performs calculation and the like and a storage apparatus (not illustrated), and generates a processing job of the sheet processing apparatus 30 on the basis of layout data. The layout data is acquired by, for example, a predetermined method and stored in the storage apparatus.

The layout data has a large amount of information, and high processing capability and a large storage area are required to process the layout data. Many sheet processing apparatuses 30 do not have such a configuration and cannot directly process layout data. The processing job generation apparatus 20 converts layout data that cannot be processed by the sheet processing apparatus 30 into a processing job that can be processed by the sheet processing apparatus 30.

The layout data includes at least "arrangement information of a product", and may include "processing information for a product" and "calling information of a processing job" as an example. The product is a thing obtained as a result of processing the sheet by the sheet processing apparatus 30, and includes, for example, a ticket with a stub and a flier with a stub.

The "arrangement information of the product" includes, for example, a setting of a size of a sheet to be processed, and a setting of a position and a size of the product. The setting of the position and the size of the product includes a setting of a position and a shape of an outline of the product.

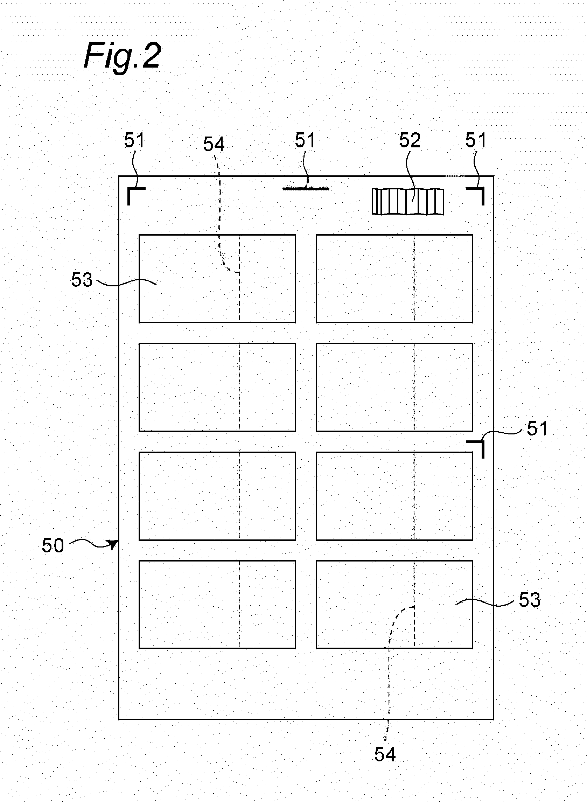

The "processing information for the product" includes, for example, a setting of a processing position (for example, a position of a cutting line, a perforation position, and a folding line position), a setting of a processing type (for example, cutting, perforation, scoring), a type of a registration mark 51 (see FIG. 2) (for example, shape and thickness), and a position of the registration mark 51.

The "calling information of the processing job" includes, for example, a position of a barcode 52. As will be described later, the sheet processing apparatus 30 may process a sheet based on processing job data stored in a storage apparatus (not illustrated) of the sheet processing apparatus 30 in addition to the case of processing a sheet based on processing job data generated by the processing job generation apparatus 20. When a sheet is processed based on processing job data stored in the storage apparatus (not illustrated) of the sheet processing apparatus 30, the "calling information of the processing job" calls a processing job stored in the storage apparatus of the sheet processing apparatus 30. Specifically, the sheet processing apparatus 30 reads a barcode printed on a sheet, and calls stored processing job data based on a job ID indicated by the read barcode.

The processing job includes at least the "arrangement information of the product" (the present embodiment includes the "processing information for the product") among the information included in the layout data, and does not include the "calling information of the processing job" that is not directly related to a processing of a sheet (for example, paper).

As illustrated in FIG. 1, the processing job generation apparatus 20 includes a decision unit 21, a first notification unit 22, a second notification unit 23, an output unit 24, an acquisition unit 25, a setting change unit 26, a third notification unit 27, and a layout data generation unit 28.

The decision unit 21 decides whether or not the sheet processing apparatus 30 can execute a processing of a sheet based on layout data. When it is decided that the sheet processing apparatus 30 can execute a processing of a sheet based on layout data, a processing job is generated based on the layout data.

For example, the decision unit 21 decides whether or not any one of the following sheet processing apparatuses 30 can execute a processing of a sheet.
- The sheet processing apparatus 30 connected to the processing job generation apparatus 20. In this case, the decision unit 21 decides whether or not the sheet processing apparatus 30 can execute a processing of a sheet based on "information on a setting state of the sheet processing apparatus 30" acquired by the acquisition unit 25.
- The sheet processing apparatus 30 that is not connected to the processing job generation apparatus 20 or is not powered on. In this case, for example, the "information on the setting state of the sheet processing apparatus 30" is stored in advance in the storage apparatus of the processing job generation apparatus 20. Then, for the sheet processing apparatus 30 that is decided not to be connected to the processing job generation apparatus 20 or decided not to be powered on, the decision unit 21 decides whether or not a processing of a sheet is executable based on the "information on the setting state of the sheet processing apparatus 30" stored in the storage apparatus. Whether or not the sheet processing apparatus 30 is connected to the processing job generation apparatus 20 is decided, for example, by detecting whether or not a communication cable is connected to the sheet processing apparatus 30. Whether or not the sheet processing apparatus 30 is powered on is decided, for example, by whether or not an acknowledgement response to an unique message can be received, the unique massage being transmitted to the communication cable connected to the sheet processing apparatus 30.

For example, the decision unit 21 decides whether or not the sheet processing apparatus 30 can execute a processing of a sheet according to at least one of the following criteria.
- Whether or not a size of a sheet that the sheet processing apparatus 30 can process is set based on the arrangement information of the product.
- Whether or not a setting of a size of a sheet to be processed included in the arrangement information of the product matches a size of a sheet set in the sheet processing apparatus 30.
- In a case where processing information for a product is included in the layout data, whether or not a processing position is set at a position executable by the sheet processing apparatus 30 based on the processing information for the product.
- In a case where processing information for a product is included in the layout data, whether or not a type of processing executable by the sheet processing apparatus 30 is set based on the processing information for the product.
- In a case where processing information for a product is included in the layout data, whether or not the position of the registration mark 51 is set at a position readable by the sheet processing apparatus 30 based on the processing information for the product.
- In a case where processing information for a product is included in the layout data, whether or not a type of the registration mark 51 readable by the sheet processing apparatus 30 is set based on the processing information for the product.
- In a case where the calling information of the processing job is included in the layout data, whether or not the position of the barcode 52 is set at a position readable by the sheet processing apparatus 30 based on the calling information of the processing job.

The first notification unit 22 notifies a decision result decided by the decision unit 21 before the processing job is generated. The second notification unit 23 notifies the "information on the setting state of the sheet processing apparatus 30" acquired by the acquisition unit 25 to be described later. Notification of the decision result and the "information on the setting state of the sheet processing apparatus 30" is performed, for example, via any one or more or all of a display apparatus (not illustrated), a speaker (not illustrated), and a light emitting apparatus (not illustrated). For example, the display apparatus, the speaker, and the light emitting apparatus may be provided in the processing job generation apparatus 20 or may be provided in another apparatus (for example, an external apparatus).

The output unit 24 outputs the processing job generated by the processing job generation apparatus 20 to the sheet processing apparatus 30. In the present embodiment, the output unit 24 is communicably connected to the sheet processing apparatus 30 according to an arbitrary standard. The processing job generated by the processing job generation apparatus 20 is output by, for example, wireless or wired communication.

The generated processing job is output to the sheet processing apparatus 30 when the processing job generation apparatus 20 is requested to output the processing job to the sheet processing apparatus 30. The output of the processing job to the sheet processing apparatus 30 is requested by an operator's operation, for example.

The acquisition unit 25 acquires the "information on the setting state of the sheet processing apparatus 30". In the present embodiment, the acquisition unit 25 is communicably connected to the sheet processing apparatus 30 according to an arbitrary standard, and acquires the "information on the setting state of the sheet processing apparatus 30" from the sheet processing apparatus 30. The information on the setting state of the sheet processing apparatus 30 includes, for example, "whether or not it is connected to the processing job generation apparatus 20 (including whether or not power is turned on)", "operation state of the sheet processing apparatus 30 (for example, whether it is deactivated or in operation)", "whether or not processing is completed", "whether or not an error occurs", and "which attachment option is selected".

The setting change unit 26 is configured to be able to change a setting of the generated processing job. The setting of the processing job includes a content of the processing job. In a case where the processing job includes "processing information for the product", for example, the setting of the processing position can be changed to move a processing mark 54 (illustrated in FIG. 2) to an arbitrary position. The setting of the generated processing job is changed via, for example, an input apparatus (not illustrated). In the present embodiment, as an example, the input apparatus is provided in the processing job generation apparatus 20. When the setting of the generated processing job is changed, the decision unit 21 decides whether or not the . changed processing job is executable by the sheet processing apparatus 30.

The third notification unit 27 notifies a decided decision result when the setting of the generated processing job is changed and the decision unit 21 decides whether or not the changed processing job is executable by the sheet processing apparatus 30. The notification of the decision result is performed, for example, via any one or more or all of the display apparatus (not illustrated), the speaker (not illustrated), and the light emitting apparatus (not illustrated). For example, the display apparatus, the speaker, and the light emitting apparatus may be provided in the processing job generation apparatus 20 or may be provided in another apparatus (for example, an external apparatus).

The layout data generation unit 28 generates layout data reflecting the changed processing job when the setting of the generated processing job is changed. The generated layout data is stored in, for example, the storage apparatus of the processing job generation apparatus 20.

The sheet processing apparatus 30 includes, as an example, a CPU (not illustrated) that performs calculation and the like and the storage apparatus (not illustrated), and performs according to a processing job a processing on a sheet on which the print image 50 (see FIG. 2) is printed. The print image 50 includes, for example, an image of a product 53, arrangement of the product, and processing information for the product.

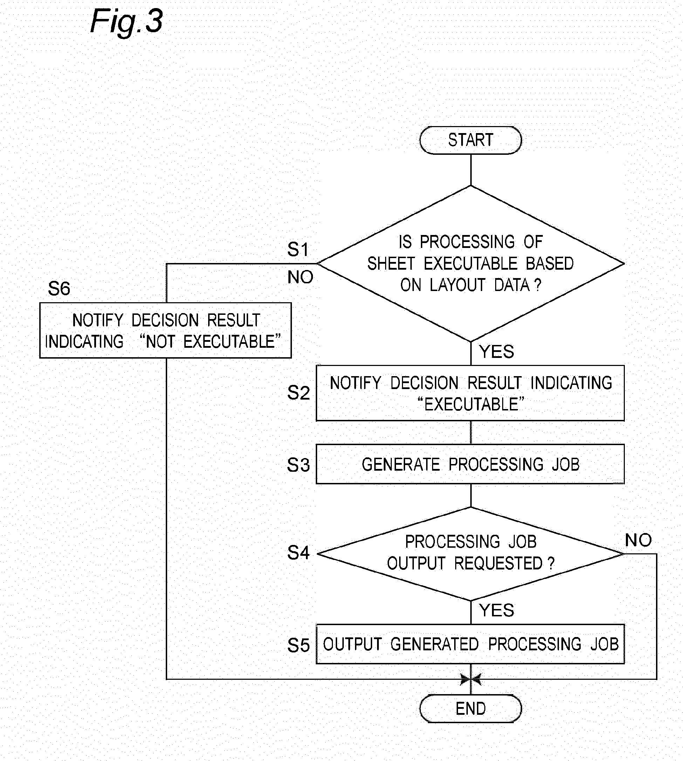

Next, a processing job generation process of the processing job generation apparatus 20 will be described with reference to FIG. 3. The process described below is performed, as an example, by the processing job generation apparatus 20 executing a predetermined program.

As illustrated in FIG. 3, when the processing job generation process is started, the processing job generation apparatus 20 decides whether or not the processing of a sheet is executable by the sheet processing apparatus 30 based on layout data (step S1).

When it is decided that the processing of a sheet is executable by the sheet processing apparatus 30 based on the layout data, the first notification unit 22 notifies a decision result indicating "executable" (step S2), and the processing job generation apparatus 20 generates a processing job based on the acquired layout data (step S3).

When the processing job is generated, the processing job generation apparatus 20 decides whether or not there is a request to output the processing job to the sheet processing apparatus 30 (step S4). When there is a request to output the processing job to the sheet processing apparatus 30, the processing job generation apparatus 20 outputs the generated processing job to the sheet processing apparatus 30 (step S5), and the processing job generation process ends. When there is no request to output the processing job to the sheet processing apparatus 30, the processing job generation process ends without outputting the generated processing job to the sheet processing apparatus 30.

In a case where it is decided in step S2 that the sheet processing apparatus 30 cannot execute a processing of a sheet based on the layout data, the first notification unit 22 notifies a decision result indicating "not executable" (step S6), and the processing job generation process ends.

According to the processing job generation apparatus 20 of the present embodiment, the following effects can be exhibited.

The processing job generation apparatus 20 includes the decision unit 21 that decides whether or not the sheet processing apparatus 30 can execute a processing of a sheet based on layout data. With such a configuration, it is possible to realize the processing job generation apparatus 20 capable of deciding whether or not a processing job to be generated is executable by the sheet processing apparatus 30 from the layout data before the processing job is generated.

When it is decided that the sheet processing apparatus 30 can execute the processing of the sheet based on the layout data, the processing job generation apparatus 20 generates a processing job based on the layout data. By creating the processing job based on the layout data decided to be executable, it is possible to suppress occurrence of waste of sheets by re-execution of a processing.

The processing job generation apparatus 20 includes the first notification unit 22 that notifies a decision result decided by the decision unit 21. With such a configuration, it is possible to easily grasp the decision result decided by the decision unit 21 before the processing job is generated.

The decision result includes a decision reason when it is decided that the sheet processing apparatus 30 cannot execute the processing of the sheet based on the layout data. With such a configuration, the layout data can be appropriately corrected without confirming the setting state of the sheet processing apparatus 30.

The processing job generation apparatus 20 includes the output unit 24 that outputs the generated processing job to the sheet processing apparatus 30. For example, by transmitting only the processing job created based on the layout data decided to be executable to the sheet processing apparatus 30, an amount of information stored in the sheet processing apparatus 30 can be suppressed.

The processing job generation apparatus 20 includes the acquisition unit 25 that acquires the information on the setting state of the sheet processing apparatus 30. The acquired information on the setting state is notified via the second notification unit 23. With such a configuration, the setting state of the sheet processing apparatus 30 can be accurately grasped, and timing at which processing can be performed on a sheet can be easily grasped.

The processing job generation apparatus 20 includes the setting change unit 26 that can change the setting of the generated processing job. With such a configuration, since the processing job generation apparatus 20 can correct the processing job, it is possible to reduce trouble when changing the setting of the processing job.

When the setting of the generated processing job is changed, the decision unit 21 decides whether or not the changed processing job is executable by the sheet processing apparatus 30. With such a configuration, it is possible to reduce the trouble of generating layout data reflecting the change content of the processing job and deciding whether or not the processing job created based on the generated layout data is executable by the sheet processing apparatus 30.

The processing job generation apparatus 20 includes the third notification unit 27 that notifies a decision result decided by the decision unit 21. With such a configuration, it is possible to easily grasp the decision result of the decision unit 21 for the processing job whose setting has been changed by the processing job generation apparatus 20.

The processing job generation apparatus 20 includes the layout data generation unit 28 that generates layout data reflecting the changed processing job. With such a configuration, it is possible to easily reflect a changed setting of the processing job in the layout data.

The sheet processing system 10 includes the processing job generation apparatus 20 and the sheet processing apparatus 30. With such a configuration, it is possible to realize the sheet processing system 10 capable of suppressing occurrence of trouble such as re-creation of processing job or re-execution of a processing of a sheet.

The processing job generation apparatus 20 and the sheet processing system 10 of the present embodiment may be configured as follows.

The processing job generation apparatus 20 needs to include the decision unit 21, and for example, the first notification unit 22, the second notification unit 23, the output unit 24, the acquisition unit 25, the setting change unit 26, the third notification unit 27, and the layout data generation unit 28 may be omitted.

The first notification unit 22, the second notification unit 23, and the third notification unit 27 may be configured independently of each other, or the first notification unit 22 may serve as the second notification unit 23 and the third notification unit 27.

The processing job generation apparatus 20 and the sheet processing apparatus 30 are not limited to the case where they are configured independently of each other. For example, the processing job generation apparatus 20 may be provided inside the sheet processing apparatus 30, so that the processing job generation apparatus 20 constitutes a part of the sheet processing apparatus 30.

Note that, by appropriately combining any of the above-described various embodiments or modifications, it is possible to achieve the effects of the respective embodiments or modifications. In addition, a combination of the embodiments, a combination of the examples, or a combination of the embodiment and the example is possible, and a combination of the features in the different embodiments or the examples is also possible.

In the present invention, it is possible to provide a processing job generation apparatus capable of deciding whether or not a processing job to be generated is executable by a sheet processing apparatus before the processing job is generated, and thus, industrial applicability is large.

### REFERENCE SIGNS LIST

- 10: sheet processing system
- 20: processing job generation apparatus
- 21: decision unit
- 22: first notification unit
- 23: second notification unit
- 24: output unit
- 25: acquisition unit
- 26: setting change unit
- 27: third notification unit
- 28: layout data generation unit
- 30: sheet processing apparatus
- 50: print image
- 51: registration mark
- 52: barcode
- 53: image of a product

## Claims

1. A processing job generation apparatus (20) that generates a processing job of a sheet processing apparatus (30) based on layout data including at least arrangement information of a product, the sheet processing apparatus being capable of processing according to the processing job a sheet on which a print image including at least one image of the product is printed, the processing job generation apparatus (20) comprising
a decision unit (21) that decides whether or not the sheet processing apparatus (30) can execute a processing of the sheet based on the layout data.

2. The processing job generation apparatus (20) according to claim 1, wherein
when it is decided that the sheet processing apparatus (30) can execute the processing of the sheet based on the layout data, the processing job generation apparatus (20) generates the processing job based on the layout data.

3. The processing job generation apparatus (20) according to claim 1 or 2, comprising
a first notification unit (22) that notifies a decision result decided by the decision unit (21).

4. The processing job generation apparatus (20) according to claim 3, wherein
the decision result includes a decision reason in a case where it is decided that the sheet processing apparatus (30) cannot execute the processing of the sheet based on the layout data.

5. The processing job generation apparatus (20) according to any one of claims 1 to 4, comprising
an output unit (24) that outputs the generated processing job to the sheet processing apparatus (30).

6. The processing job generation apparatus (20) according to any one of claims 1 to 5, comprising:
an acquisition unit (25) that acquires information on a setting state of the sheet processing apparatus (30); and
a second notification unit (23) that notifies the acquired information on the setting state.

7. The processing job generation apparatus (20) according to any one of claims 1 to 6, comprising
a setting change unit (26) that can change a setting of the generated processing job.

8. The processing job generation apparatus (20) according to claim 7, wherein
the decision unit (21) decides whether or not the changed processing job is executable by the sheet processing apparatus (30) when the setting of the generated processing job is changed.

9. The processing job generation apparatus (20) according to claim 8, comprising
a third notification unit (27) that notifies a decision result decided by the decision unit.

10. The processing job generation apparatus (20) according to any one of claims 7 to 9, comprising
a layout data generation unit (28) that generates the layout data reflecting the changed processing job.

11. A sheet processing system (10), comprising:
the processing job generation apparatus (20) according to any one of claims 1 to 10; and
the sheet processing apparatus (30) that processes the sheet according to the processing job generated by the processing job generation apparatus (20).
